Europäisches Patentamt

European Patent Office

Office européen des brevets

(19)

(11) Publication number: **0 025 318**
A1

# (12) EUROPEAN PATENT APPLICATION

(21) Application number: **80302989.1**

(22) Date of filing: **28.08.80**

(51) Int. Cl.³: **B 29 D 29/00**
D 06 B 21/00, D 06 B 1/14
D 06 C 25/00, B 05 D 1/28

(30) Priority: **31.08.79 AU 292/79**

(43) Date of publication of application:
**18.03.81 Bulletin 81/11**

(84) Designated Contracting States:
**BE DE FR GB**

(71) Applicant: **Brenwill Industries Pty. Limited
4, Powlett Street
Moorabbin Victoria(AU)**

(72) Inventor: **Willis, John Alexander
4 Powlett Street
Moorabbin Victoria(AU)**

(74) Representative: **Bannerman, David et al,
Withers & Rogers 4 Dyer's Buildings Holborn
London, EC1N 2JT(GB)**

(54) Improvements in the manufacture of belts and belts made by the process.

(57) A method of and apparatus for coating a fabric web 10 with a thermoplastics material which comprises pre-heating the web 13,15, passing the web downwardly through coating heads 14 which comprise a series of rollers 16,17,18 whereby a plastisol is coated on to each side of the web and then passing the web under tension through a vertical oven 21 which cures the plastisol, the web passing through calendering rollers 22,23 and then through cooling rollers 24 to a takep-up 25.

./...

Croydon Printing Company Ltd.

0025318

## IMPROVEMENTS IN THE MANUFACTURE OF BELTS AND BELTS MADE BY THE PROCESS

This invention relates particularly to improvements in the manufacture of belts and specifically to the manufacture of belts of solid woven construction.

Such belts, particularly when being used as mine belts, at least for certain applications, have to be manufactured to extremely rigid standards in that they must be able to accept relatively heavy loads, should not generate static electricity or be likely to cause sparks and, should there be a fire in the mine, they must be, effectively, flame resistant.

Rubber coated fabric or steel belts are, generally, not acceptable as rubber can generate static electricity and rubber and fabric are both flamable and steel belts can cause sparks. Normally belts are made from a non-rubberised material.

The usual method of manufacturing solid woven construction belts is to weave a multi-layer fabric carcass and, during the weaving step, to either spray impregnate or vacuum impregnate the interstices of the carcass with a plastisol then heating the carcass so impregnated whilst prestressed to the required elongation until heat set, and then rolled. Subsequently, this prepared material is passed through a pre-heating stage, at which it is brought to a desired temperature without degradation and then moved vertically upwardly through a bath of a plastisol material which may well be of V-shape, itself may be water cooled and which has a continual input of plastisol so that the bath continually overflows and during which the web or belt picks up plastisol which is subsequently cured by heat, normally infrared radiation, or convection.

This process has inherent disadvantages in that, notwithstanding the fact that the bath itself is cooled, there tends to be a build-up of partly cured polymer adjacent the belt, because of the temperature of the belt, and this has to be removed during operation, and it is also difficult to apply different materials to the two opposite sides of the belt, which is often desirable in practice.

In an alternative prior process the web is passed sinuously through a number of coating steps in which, at the lower part of each movement, the web is immersed in a bath of plastisol, it moves upwardly to a top position and downwardly, again, to the bath with infrared or convection ovens curing the plastisol during each upward and downward movement.

In this form, the web has to be coated on each side with the same material and the general thickness of material is identical on each side.

It is an object of the present invention to provide an improved method of coating a web with a thermoplastic material which is cheaper and simpler than previously known methods and which, at the same time, enables a heavier coating or higher throughput rate than has heretobefore been achieved and, also, enables selective coating of opposite sides of the web.

The invention includes the method of coating a web with a plastisol including the steps of passing the web through at least one heating stage, passing the web vertically downwardly through coating heads so that a plastisol or liquid polymer can be placed on each side of the web, then downwardly through a vertical oven so that this material can be fused, through calendering rollers, to ensure that the completed belt is sized and consolidated, and through cooling rollers and to a take-up reel.

Normally the web is a fabric web which has been, during manufacture, impregnated with a plastisol and the initial heating stage cures the plastisol and heats the polymer to a temperature close to the allowed maximum.

The coating heads may well comprise a group of interacting rollers, one of which is in contact with a bath of plastisol and which ensure even coating of plastisol on to the web and each coating head may deliver to the side of the web with which it is in contact a greater or lesser amount of plastisol and, also, plastisols of different molecular weights.

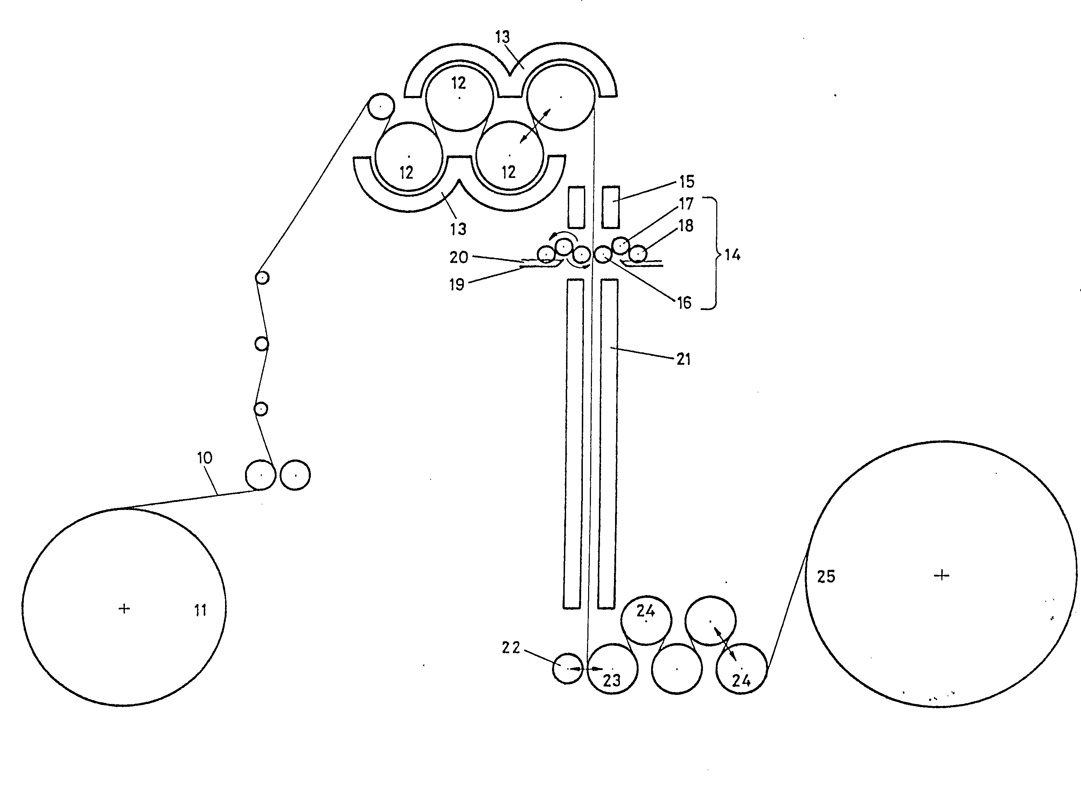

In order that the invention may be more readily understood, we shall describe a specific embodiment of the invention in relation to the accompanying drawing, which is schematic.

This embodiment is adapted to produce a mine belt which may have any desired width.

The carcass of the belt is woven in a known manner to ensure integrity and either during weaving or subsequent to weaving is impregnated with a PVC plastisol or any other satisfactory liquid polymer.

If the impregnation is done during weaving the warp threads may pass through a bath of the plastisol and, if subsequent to weaving, the carcass may be vacuum impregnated.

The web 10 may be passed directly from the loom or, as illustrated, in a web state from a reel 11, the web is guided to a series of heated rollers 12. As illustrated, there are four rollers which may be 24" diameter rollers. Each of the rollers 12 has about half of its periphery an infrared heater 13 so that the plastisol in the web 10 is cured and, on leaving the rollers, the web is at a temperature which is close to maximum temperature without degradation and heat set. The web then passes to coating heads 14, possibly after passing through a maintenance heater 15, and these coating heads may each comprise a number of rollers. As illustrated, there are three rollers 16, 17, 18, one of which, roller 18, is partially immersed in a bath 19 of plastisol 20, the second of which, roller 17, is a distribution roller to ensure that the amount of plastisol is equal across the width of the web and the third, roller 16, is a coating roller which applies the material to the web 10. We prefer that the coating roller rotates in a direction contra to the direction of the web to ensure good delivery of the plastisol 20 to the web 10.

It will be appreciated that the coating heads 14 on each side of the web are effectively completely independent and, thus, if required, plastisols of different viscosity or different molecular weights, to provide polymers of different hardness or plastisols of different polymers, including urethanes, can be applied to the opposite sides of the web.

Also, because the web is running vertically downwardly, greater quantities of plastisol 20 can be applied to the web than is the case if the web is running upwardly as additional plastisol can flow slightly downwardly after the web 10 leaves the heater 15 and, in all, the coating thickness can be readily simply controlled.

After passing through the coating heads, the web passes through an infrared oven 21, the length of which is arranged to fully cure or fuse the PVC or other coating on the web before it leaves the oven.

After leaving the oven and whilst still hot, the web, which can then be considered to be a belt, passes through calendering rollers 22, 23 to ensure evenness of thickness. These calendering rollers 22, 23 also provide the required tension of the web 10 as it passes through the oven 21 by acting against the last of the rollers 12. The belt then passes over a plurality of cooling rollers 24 whereby it is slowly brought to an acceptable temperature on to a take-up reel. The calendering rollers 22, 23 may, for example, be maintained at approximately $140^0$C, the first of the cooling rollers 24 at say, $100^0$C and the remainder at $80^0$C. These temperatures are only exemplary.

Between the last of the cooling rollers 24 and a take-up reel 25 there may be provided means to remove excess PVC, or other polymer, from the side of the belt and also, if necessary, the belt can be split to required useable widths. This is not illustrated.

The final product on the take-up reel or reels is then a complete belt which is evenly coated with polymeric material, the coatings on the opposite sides of the carcass being of the same or different polymer and the same or different thickness, the required tensioning and heat setting having been effected between the last of the primary curing rollers 12 and the calendering rollers 22, 23. Tension in the belt is maintained as it pans over the cooling rollers 24 so the completed, cooled belt is of the required tension.

It will be seen that the whole operation being effected simply and more efficaciously than previously.

Should it be required that different carcasses be coated, it is relatively simple to arrange that any rollers having a nip which brings them into or close to contact with the carcasses can be immediately moved outwardly to permit the connection between the webs, which is normally done by lacing, to pass therebetween and to then resume either the initial operating condition or the operating condition required for the new carcass.

The movement of the various rollers can be arranged so that there can be semiautomatic variation in the conditions for different webs so that the change-over from one web to another can be effected with minimal disruption to machine operation and with little or no waste of plastisol. We can provide a remote control point at which the rollers are moved outwardly when required and, on return movement, the rollers are moved to their required new condition. It is also possible to vary width gates or the like so that webs of different widths can be accommodated rapidly and readily.

Control of plastisol or other liquid polymer delivery can also be such that if a new web is to be coated with a plastisol different to the initial plastisol, then a change-over can be effected close to the junction of the two webs and a minimal amount of material be wasted.

Thus, the only time at which the machine needs to be stopped is if a colour change is required.

It can be seen that the apparatus and method of the invention greatly simplifies the method of making belts, it can either deliver greater quantities of plastisol to a carcass than has previously been possible or, more particularly, it can deliver the same quantity at speeds which were otherwise not obtainable. Under either circumstance, the apparatus and method of the invention simplifies, and thus cheapens, the cost of manufacturing of belts of solid woven construction.

Although in this specification we have specifically discussed the manufacture of belts, it is to be understood that the invention can equally well be applied to other belts having a single or multiple web carcass which may be initially impregnated with a plastisol and onto which an outer layer of material is to be coated.

CLAIMS:

1.  A method of coating a web with a plastisol including passing the web (10) through at least one heating stage (12, 13), passing the web through coating heads (14) so that a plastisol or liquid polymer (20) can be placed on each side of the web, then through a vertical oven (21) so that this material can be fused, through calendering rollers (22, 23), to ensure that the completed belt is sized and consolidated, and through cooling rollers (24) and to a take-up reel (25) characterised in that the movement of the web (10) through the coating heads and its movement through the bertical oven (21) is a vertical downward movement.

2.  A method as claimed in claim 1 wherein the web (10) is a fabric web which has, during manufacture, been impregnated with a plastisol and wherein the initial heating stage (12, 13) cures the plastisol and heats the polymer to a temperature close to the maximum before degredation occurs.

3.  A method as claimed in claim 2 wherein the web passes through a maintenance heater (15) between the initial heating stage and the coating heads (14).

4.  A method as claimed in claim 1 wherein there is a coating head (14) located on each side of the web (10), each coating head being adjustable to control the amount of plastisol (20) deposited on the adjacent side of the web.

5.  A method as claimed in claim 4 wherein each coating head comprises a plurality of rollers one of which rollers (18) is in a bath (19) of plastisol (20), and each of the intermediate rollers (17) are distribution rollers and the final roller (16) is a coating roller.

6.  A method as claimed in claim 5 wherein the coating roller (16)rotates in a direction opposite the direction of movement of the web (10).

7.  A method as claimed in claim 1 wherein after the belt leaves the final cooling roller (24) it passes through means whereby excess polymer can be removed from the edge thereof or where the belt can be cut to predetermined widths.

8.  A method as claimed in any one of claims 1 to 6 wherein means are provided to separate all rollers which are in contact with or close to the web to enable joins between webs to pass therethrough.

9.  A method as claimed in claim 8 wherein when a different web has been passed through a set of rollers which are in contact with or close to the web the rollers are returned to a condition applicable to the different web so as to form a belt including the web which has the required properties.

10. A belt made by the method of coating a web with a plastisol including passing the web through at least one heating stage, passing the web vertically downwardly through coating heads so that a plastisol or liquid polymer can be placed on each side of the web, then downwardly through a vertical oven so that this material can be fused, through calendering rollers, to ensure that the completed belt is sized and consolidated, and through cooling rollers and to a take-up reel.

EU

0025318

## EUROPEAN SEARCH REPORT

Application number

EP 80 30 2989

| Category | Citation of document with indication, where appropriate, of relevant passages | Relevant to claim |
|---|---|---|
| X | GB - A - 1 173 003 (J. BRIGHT + BROTHERS) <br> * Page 1, lines 31-32; page 2, lines 18-20, 41-44; page 4, line 23 to page 5, line 10 and lines 54-79; figure 5 * | 1-4, 8-10 |
| | -- | |
| | DE - B - 1 249 210 (J. MENSCHNER) | 1 |
| | -- | |
| | GB - A - 1 515 931 (LEXMAIN LTD.) <br> * Page 2, lines 70-96; figure * | 4,5 |
| | -- | |
| | FR - A - 1 526 330 (ET. G. CONVERT) <br> * Figure 5 * | 6 |
| | -- | |
| | DE - A - 1 940 665 (SALZGITTER HUTTENWERK) <br> * Claim 5; figures * | 6 |
| | -- | |
| A | GB - A - 668 721 (J. TEMPLETON) | |
| A | DE - A - 2 700 303 (FUJI PHOTO FILM) | |
| A | US - A - 3 265 525 (A. LICHTE) | |
| | ---- | |

### DOCUMENTS CONSIDERED TO BE RELEVANT

### CLASSIFICATION OF THE APPLICATION (Int. Cl.³)

B 29 D 29/00
D 06 B 21/00
D 06 B 1/14
D 06 C 25/00
B 05 D 1/28

### TECHNICAL FIELDS SEARCHED (Int. Cl.³)

B 29 D 29/00
B 05 D 1/28
B 29 H 7/22
D 06 C 25/00
D 06 C 7/00

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 05-12-1980 | VAN BELLEGHEM |

EPO Form 1503.1 06.78